# EUROPÄISCHE PATENTANMELDUNG

(11) **EP 0 933 569 A2**
(43) Veröffentlichungstag der Anmeldung: **04.08.1999**
(21) Anmeldenummer: 99890040.1
(22) Anmeldetag: 03.02.1999
(51) Int. Cl.: F16K 11/052

(54) **Wippenventil**

(30) Priorität: 04.02.1998 AT 19798
(71) Anmelder: HYGRAMA AG, CH-6343 Rotkreuz (CH)
(72) Erfinder: Frisch, Herbert, 86972 Altenstadt (DE); Vollmer, Josef, 86975 Bernbeuren (DE)
(74) Vertreter: Laminger, Norbert, Mag.

(57) **Zusammenfassung**

Ein Wippenventil mit pneumatischer Vorsteuerung, umfaßt ein Gehäuse (G) mit den Druckmittelanschlüssen (P, A, R, Ps), in welchem Gehäuse eine zwischen zwei Endstellungen um eine Achse bewegliche und mit zumindest einer Dichtfläche (9) für zumindest zwei Druckmittelanschlüsse zusammenwirkenden Wippe (1) eingesetzt ist, wobei ein Schenkel der Wippe über einen Vorsteueranschluß (Ps) mit einem Vorsteuerdruck beaufschlagbar ist und die Wippe (1) in einer Endstellung einen Arbeitsanschluß (A) mit dem Versorgungsdruckanschluß (P) und in der anderen Endstellung mit dem Entlüftungsanschluß (R) verbindet. Um bei größtmöglicher Einfachheit im Aufbau und Platzersparnis ein Höchstmaß an Betriebssicherheit durch bestmögliche Abdichtung der Anschlüsse und Exaktheit sowie kurze Zeiten beim Schalten zu gewährleisten, sind zwei Arbeitsanschlüsse (A1, A2) vorhanden, von welchen in jeder der beiden Endstellungen der Wippe (1) jeweils ein Arbeitsanschluß durch die Wippe (1) und die Dichtfläche (9) abgedeckt ist, wobei ein Arbeitsanschluß (A1) durch die Wippe (1) von einem Versorgungsanschluß (P) und der zweite Arbeitsanschluß (A2) durch die Wippe (1) von einem Entlüftungsanschluß (R) trennbar ist.

## Beschreibung

Die Erfindung betrifft ein Wippenventil mit pneumatischer Vorsteuerung, umfassend ein Gehäuse mit den Druckmittelanschlüssen, in welchem Gehäuse zumindest eine zwischen zwei Endstellungen um eine Achse bewegliche und mit zumindest einer Dichtfläche für zumindest einen Ventilsitz eines Druckmittelanschlusses zusammenwirkenden Wippe eingesetzt ist, wobei ein Schenkel der Wippe über einen Vorsteueranschluß mit einem Vorsteuerdruck beaufschlagbar ist und die Wippe in einer Endstellung den Ventilsitz dicht abschließt und in der anderen Endstellung mit maximalem Querschnitt öffnet.

Ein derartiges Wippenventil ist beispielsweise durch eine Konstruktion der Samsomatic Automationssysteme GmbH bekannt. Dabei wird die Grundstellung, in der der Versorgungsanschluß und der Arbeitsanschluß voneinander isoliert sind, durch Federkraft eingehalten und das Schalten, d.h. die Freigabe der Verbindung von Versorgungs- und Arbeitsanschluß bzw. das Schließen erfolgen pneumatisch vorgesteuert. Die Drehachse dieser Ausführungsform ist durch den einfachen Wulst einer Elastomerformdichtung gegeben, wodurch die Sicherheit der Abdichtung und durch die zusätzliche mechanische Belastung des Dichtelementes auch die Lebensdauer des Ventils nachteilig beeinflußt werden können. Überdies wird das Ventil lediglich durch die Federkraft geschlossen gehalten und hat damit druckabhängige Eigenschaften, es ist nur bis zu einem vorgegebenen Maximaldruck verwendbar.

Wippenventile sind darüberhinaus in verschiedenen anderen Ausführungsformen gebaut worden, etwa als Hubankermodell der Bürkert Steuer- und Regeltechnik. Dabei wird eine Wippe durch Federkraft in einer Schließstellung (Versorgungsanschluß und Arbeitsanschluß voneinander isoliert) gehalten und das Schalten erfolgt über einen Hubmagneten, der die Wippe gegen die Wirkung der Feder um den Drehpunkt in die offene Stellung verschwenkt. Wieder ist das Ventil lediglich durch die Federkraft geschlossen gehalten und hat damit druckabhängige Eigenschaften, es ist nur bis zu einem vorgegebenen Maximaldruck verwendbar. Darüberhinaus ist das Ventil durch den zum Schalten notwendigen Elektromagneten sehr platzaufwendig.

Es war daher die Aufgabe der vorliegenden Erfindung ein Wippenventil zu schaffen, das rein druckmittelbetätigt ist und bei größtmöglicher Einfachheit im Aufbau und Platzersparnis vielseitig einsetzbar und an unterschiedliche Einsatzzwecke adaptierbar ist, ein Höchstmaß an Betriebssicherheit durch bestmögliche Abdichtung der Anschlüsse und Exaktheit sowie kurze Zeiten beim Schalten bietet.

Diese Aufgabe wird erfindungsgemäß dadurch gelöst, daß auf zumindest der Seite der Wippe mit einem Arbeitsanschluß ein Dichtelement zwischen dem Rand der Wippe und der Innenwand des Gehäuses vorgesehen ist, durch welches auf einer Seite der Wippe bezüglich der Achse als auch der Ebene der Wippe eine Kammer mit zumindest zwei Anschlüssen gebildet ist, die vorzugsweise von zumindest einem weiteren Anschluß auf der bezüglich der Wippenebene gegenüberliegenden Seite abgetrennt ist. Auf diese Weise bleibt der weitere Anschluß sicher und dicht abgetrennt von den beiden anderen Anschlüssen auf der anderen Seite der Wippe und es kann trotz schneller Schaltzeiten und gleichzeitig flacher Bauform bezogen auf den Öffnungsquerschnitt ein exaktes Schalten des Ventils gewährleistet werden. Aufgrund der für das Schalten ausreichenden kleinen Drehbewegungen der Wippe kann das erfindungsgemäße Ventil sehr klein und flach gebaut werden und kann einen schichtweisen Aufbau haben, der sowohl beim Zusammenbau als auch bei allfälliger Reparatur eine sehr einfache Durchführung der Arbeiten gestattet.

Gemäß einer vorteilhaften Ausführungsform der Erfindung ist vorgesehen, daß auf beiden Seiten der Wippe ein Dichtelement zwischen dem Rand der Wippe und der Innenwand des Gehäuses vorgesehen ist und dadurch auf jeder Seite der Wippe je eine Kammer mit zumindest zwei Anschlüssen gebildet ist, die vorzugsweise von zumindest einem weiteren Anschluß auf der bezüglich der Wippenebene gegenüberliegenden Seite abgetrennt ist. Damit erhöht sich die Vielseitigkeit des erfindungsgemäßen Ventils noch weiter, da in dieser Bauform mit beibehaltener Schnelligkeit und Exaktheit des Schaltens viele unterschiedliche Belegungen der Anschlüsse und damit viele Anwendungen möglich sind.

Gemäß einem Merkmal der Erfindung sind zwei Arbeitsanschlüsse vorhanden, von welchen in jeder der beiden Endstellungen der Wippe jeweils ein Arbeitsanschluß durch die Wippe und die Dichtfläche abgedeckt ist, wobei ein Arbeitsanschluß durch die Wippe von einem Versorgungsanschluß und der zweite Arbeitsanschluß durch die Wippe von einem Entlüftungsanschluß trennbar ist. Damit ist eine Ventilkonstruktion mit kleinsten Schadräumen möglich, die in allen Ausführungsformen auch bei Druckmittelbetätigung und selbst für große Mündungsquerschnitte schnelle Schaltzeiten und exakte Abdichtungsfunktion gewährleistet.

Gemäß einem weiteren Merkmal der Erfindung ist in sehr einfacher Art und Weise ein NO-Ventil (Normalzustand, d.h. ohne Vorsteuerdruck, offen) zu realisieren, indem die wirksame Angriffsfläche für den Versorgungsdruck an den beweglichen Teilen des Ventils größer ist als die Fläche der Mündung des zweiten, mit dem Entlüftungsanschluß verbindbaren Arbeitsanschlusses.

Um in einfacher Weise und mit den oben genannten Vorteilen ein 2/2-Wege-Ventil zu realisieren, ist gemäß einem weiteren Merkmal der Erfindung vorgesehen, daß auf lediglich einer Seite der Wippe zwei Anschlüsse in eine Kammer vorgesehen sind, welche Kammer durch das sich vom Rand der Wippe zur Innenwand des Gehäuses erstreckende elastische Dichtelement begrenzt ist.

Wenn zumindest zwei Wippen in einem Gehäuse parallel zueinander geschaltet vorgesehen sind, kann in einfacher Weise ein sehr schnelles und exaktes 4/2- oder 5/2-Wege-Ventil mit geringer Bauhöhe und allen weiteren, oben bereits genannten Vorteilen hergestellt werden.

Vorteilhafterweise ist vorgesehen, daß die Wippe im wesentlichen symmetrisch um ihre Drehachse ist. Dies erleichtert den Zusammenbau des Ventils, dessen Umbau in verschiedene Ausführungsformen und die Auslegung bezüglich der Schaltdrücke und -zeiten. Geringe Abweichungen von der totalen Symmetrie bezüglich der Flächenverhältnisse der Druckmittelmündungen und wirksamen Flächen für den Angriff der Drücke sind zur Auslegung für ein exaktes Schaltverhalten möglich, beispielsweise zur Erzielung einer Schalthysterese.

Um vorteilhafterweise eine leichte Beweglichkeit der Wippe und schnelle Schaltzeiten bei gleichzeitig einfachem Aufbau und Zusammenbau zu gewährleisten, ist der äußere Rand der Wippe zumindest über einen Teil seiner Länge von der Gehäuseinnenwandung beabstandet und ist zumindest jeweils ein sich zwischen dem Rand der Wippe und der Gehäuseinnenwandung erstreckendes Dichtelement, vorzugsweise ein Elastomerdichtelement, vorgesehen.

Wenn gemäß einer weiteren Ausführungsform das Dichtelement einstückig mit zumindest einer Dichtfläche für einen Anschluß ausgeführt ist, vorzugsweise einstückig mit beiden Dichtflächeen ist, und sich auf beide Seiten der Wippe erstreckt, ist damit ein besonders einfacher Aufbau mit Verringerung der Bauteilzahl gegeben, der darüberhinaus auch sehr funktionssicher und langlebig ist.

Um eine sehr flach bauende Konstruktion zu erhalten, die auch einfach auf bestehende Anschlußplatten aufsetzbar ist, und auf die selbst wieder Vorsteuerventile oder Magnetsteuerventile aufgesetzt werden können, ist vorgesehen, daß der Versorgungsanschluß, die Arbeitsanschlüsse und der Entlüftungsanschluß im selben Halbraum bezüglich der Ebene der Wippe angeordnet sind, wobei der Versorgungsanschluß und der Entlüftungsanschluß einander bezüglich der Drehachse der Wippe gegenüberliegen, und daß der Vorsteueranschluß in dem den übrigen Anschlüssen gegenüberliegenden Halbraum bezüglich der Ebene der Wippe liegt.

Gemäß einer vorteilhaften Ausführungsform des erfindungsgemäßen Wippenventils ist vorgesehen, daß zwischen einem Schenkel der Wippe und dem Gehäuse ein Federelement eingespannt ist und diesen Schenkel der Wippe mit einer Kraft beaufschlagt, wodurch die Wippe im drucklosen Zustand des Wippenventils in einer definierten Endstellung gehalten ist und auch die Bewegung der Wippe unterstützt wird. Damit sind selbst beim erstmaligen Beschalten oder bei Übergangszuständen während des Schaltens instabile Stellungen verhindert und somit größtmögliche Schaltsicherheit und Exaktheit gewährleistet. Auch unterstützt das Federelement die vom Druckmittel auf die Wippe ausgeübte Wirkung und kann so beispielsweise die Schließwirkung unterstützen.

Die gleiche vorteilhafte Wirkung kann dadurch erzielt werden, daß das Dichtelement eine Endlage bevorzugt und die Wippe in diese Endlage vorspannt, wobei das Dichtelement vorzugsweise in Form einer gesickten Elastomermembran ausgebildet ist.

Gemäß einer speziellen, vorteilhaften Ausführungsform der Erfindung mündet der Vorsteueranschluß auf der Seite des Schenkels der Wippe, der den einen Arbeitsanschluß und den Entlüftungsanschluß voneinander trennt. Dabei kann die Hebelwirkung bei Anlegen des Vorsteuerdrucks zur Überwindung des Drucks am Versorgungsdruckanschluß optimal zur Geltung gebracht werden.

Wenn gemäß einem weiteren Merkmal der Erfindung vorgesehen ist, daß eine Zuleitung für den Versorgungsdruck in den Gehäuseraum vorgesehen ist, der dem Gehäuseraum gegenüberliegt, in den der Versorgungsdruckanschluß und einer der Arbeitsanschlüsse münden, ist eine Ventilkonstruktion mit höchstmöglicher Druckunabhängigkeit gegeben. Der auch auf der dem Versorgungsanschluß und dessen zugeordnetem Arbeitsanschluß gegenüberliegende Seite auf die Wippe einwirkende Versorgungsdruck sorgt für einen Ausgleich der auf die Wippe einwirkenden Momente, sodaß diese durch geringe zusätzliche Kräfte sicher in der Schließstellung gehalten werden kann. Es existiert somit keinerlei prinzipieller Maximaldruck bezüglich der sicheren Funktion des erfindungsgemäßen Ventils und je nach Flächenverhältnis der beiden Wippenschenkel mit zugehörigen Abschnitten des Dichtelementes kann der zum Öffnen des Ventils benötigte Vorsteuerdruck gleich dem Versorgungsdruck oder gleich einem Bruchteil des Versorgungsdrucks sein.

In baulich einfacher und die Baugröße des Ventils nicht beeinflussenden Weise kann der oben beschriebene Momentenausgleich dadurch erzielt werden, daß in dem Schenkel der Wippe, der den Versorgungsanschluß und den Arbeitsanschluß trennt und/oder dem zugehörigen Abschnitt des Dichtelementes, zumindest eine Durchgangsöffnung in den dem Versorgungsanschluß gegenüberliegenden Gehäuseraum vorgesehen ist.

Wenn vorteilhafterweise die Drehachse der Wippe durch zumindest einen Steg des Gehäuses definiert ist, auf welchem die Wippe direkt aufliegt, vorzugsweise durch zwei einander gegenüberliegende Stege, zwischen denen die Wippe eingespannt ist, hat die Wippe durch diese direkte Gehäuseauflage einen genau definierten Drehpunkt. Damit ergibt sich eine verbesserte Dichtung, ein noch exakteres Schalten und durch Verringerung der mechanischen Beanspruchung des Dichtelementes eine Verlängerung der Lebensdauer des Ventils. Selbstverständlich muß, um die Auslenkbarkeit der Wippe zu gestatten, immer etwas Spiel zwischen Wippe und Stegen vorhanden sein.

Wenn der oder jeder Steg durch einen Abschnitt einer umlaufenden Dichtung des Dichtelementes abgedichtet ist, ist damit eine einfache Konstruktion, eine sichere Montage und sichere Funktion gewährleistet.

Die Dichtung kann gemäß einer vorteilhaften Ausführungsform im Bereich des Steges als Lippendichtung mit vom Steg weggebogenen Dichtlippen ausgeführt sein. Die zur bestmöglichen Abdichtung im Stegbereich nötige Vorspannung bewirkt dabei keine Stauchung der Dichtung und übt daher auch nur minimale Kraft auf die Wippe selbst aus. Die Kraft- und Drehmomentverhältnisse an der Wippe werden überwiegend durch die pneumatischen Drücke bestimmt und nicht durch die Vorspannung der Dichtung negativ beeinflußt.

Gemäß einer weiteren vorteilhaften Ausführungsform kann auch die Drehachse der Wippe durch zumindest einen Steg zumindest eines der Dichtelemente definiert ist, welcher Steg in entsprechenden Ausnehmungen des Gehäuses aufgenommen ist, vorzugsweise durch zwei Stege auf einander gegenüberliegenden Seiten der Dichtelemente. Damit ist eine etwas flexiblere Lagerung mit in manchen Fällen leichterer Verschwenkbarkeit der Wippe möglich.

Um die Wippe sicher zu halten und eine stabile Verbindung zwischen Wippe und Dichtelement zu gewährleisten, ist bei einer bevorzugten Ausführungsform die Wippe in ein einstückiges Dichtelement eingebettet.

Bei weniger großen Beanspruchungen ist eine einfacher herzustellende Variante denkbar, bei der die Wippe einem einstückigen Dichtelement auf dessen Oberfläche, vorzugsweise auf der den abzudichtenden Ventilsitzen gegenüberliegenden Seite, aufgelagert und daran befestigt ist.

Ebenfalls einfach in der Herstellung ist eine Ausführungsform des erfindungsgemäßen Wippenventils, bei dem die Wippe zwischen zwei separaten Dichtelementen eingebettet ist, wobei die Dichtelemente vorzugsweise im Einspannbereich von einem Gehäusesteg oder einem zusätzlichen Bauteil mit vorzugsweise der gleichen Dicke wie die Wippe voneinander im Abstand gehalten werden. Dabei sorgt der zusätzliche, abstandhaltende Bauteil bzw. der äquivalente Steg am Gehäuse für eine Verringerung der mechanischen Belastung der Dichtelemente sowie für deren besseren Sitz und damit für die Sicherstellung der Dichtwirkung ebenso wie für eine leichtere Beweglichkeit der Wippe. Die leichte Beweglichkeit kann noch durch Beschichtung der der Wippe zugewandten Seite des Dichtelementes mit einem Schmiermittel oder einem Gleitbelag verbessert werden.

Vorteilhafterweise ist der Raum zwischen den beiden Dichtelementen entlüftet, so daß keinerlei negative Beeinflussung der Kraft- und Drehmomentverhältnisse an der Wippe erfolgen kann.

Gemäß einer anderen Ausführungsform weist die Wippe zumindest im Randbereich eine Ausnehmung auf, in welche der dem Gehäuse abgewandte Rand des Dichtelementes eingespannt und abgedichtet gehalten ist. Damit ist eine aufgrund der vom Dichtelement oder anderem elastomeren Material freigehaltenen Wippe eine genau definierte Lagerung der Wippe im Bereich des Steges gewährleistet.

Zur einfacheren Herstellung und Wartung ist dabei vorteilhafterweise vorgesehen, daß die Wippe dabei aus zwei übereinanderliegenden und vorzugsweise im Bereich des Steges direkt aneinanderliegenden Platte besteht, wobei die äußeren Ränder der Platten voneinander beabstandet sind und der innere Rand des Dichtelementes sandwichartig dazwischen eingespannt ist.

Vorteilhaft beim Zusammenbau und bei der Reparatur ist eine Konstruktion, bei der der zusätzliche Bauteil ein Rahmen ist, der auch Lager für eine Drehachse der Wippe aufweist. Dabei ist gleichzeitig die Drehachse der Wippe genau definiert, wodurch eine sichere Dichtwirkung und damit höchste Funktionssicherheit gewährleistet sind.

Die Dichtwirkung und damit die Funktionssicherheit des erfindungsgemäßen Ventils kann dadurch optimal gewährleistet werden, daß die Wippe selbst eine derartige Ausdehnung aufweist, daß jede Öffnung jedes Arbeitsanschlusses abgedeckt ist.

In vorteilhafter Weise kann ein Wippenventil nach einem der vorhergehenden Absätze als einfaches, billiges und funktionssicheres Logikelement verwendet werden.

In der nachfolgenden Beschreibung soll die Erfindung sowie weitere Merkmale und Vorteile anhand mehrerer Ausführungsbeispiele und unter Bezugnahme auf die Zeichnungen näher erläutert werden.

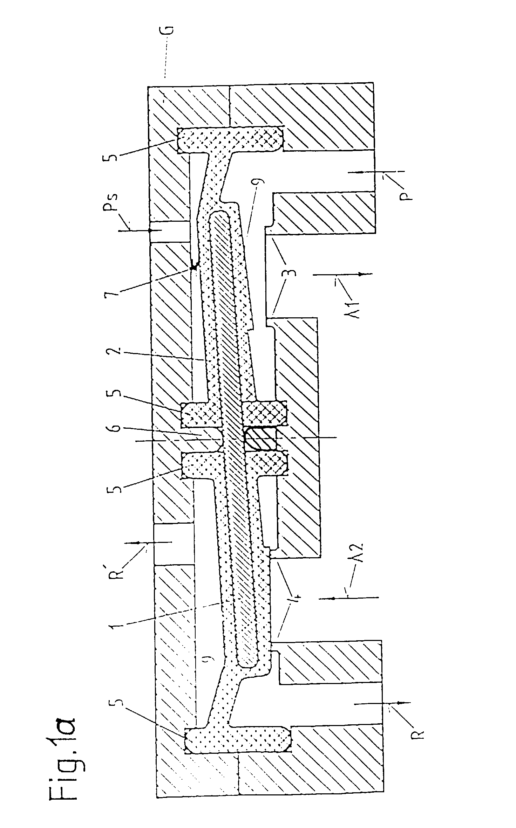

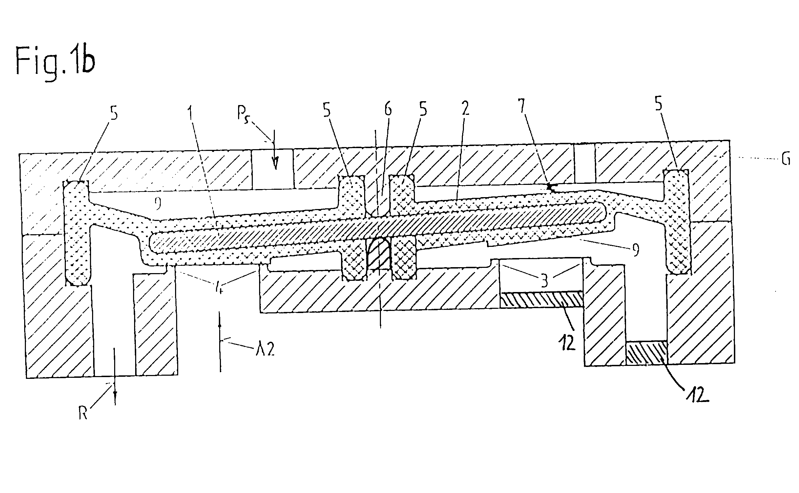

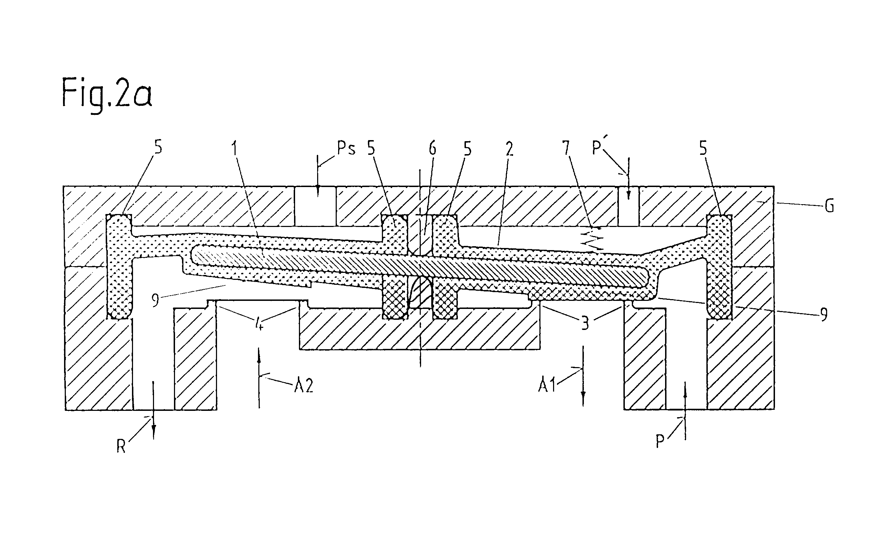

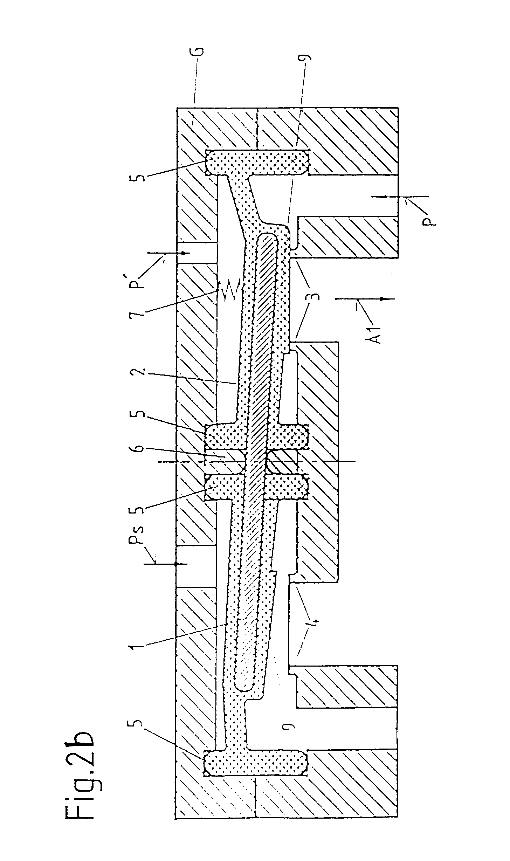

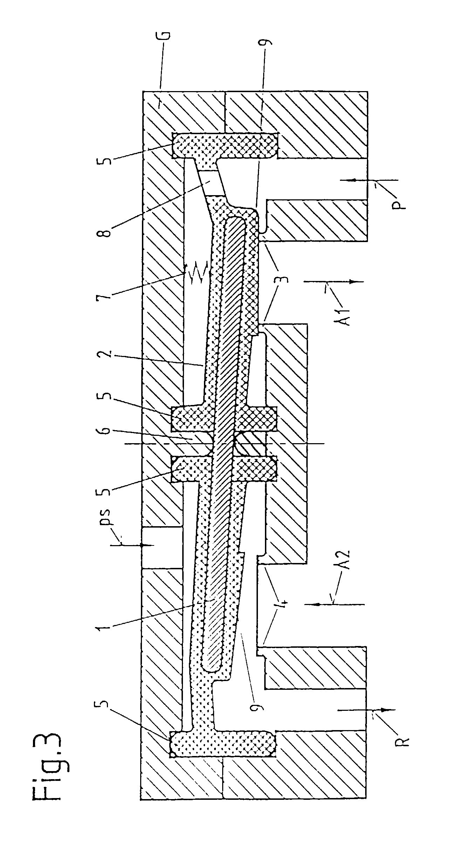

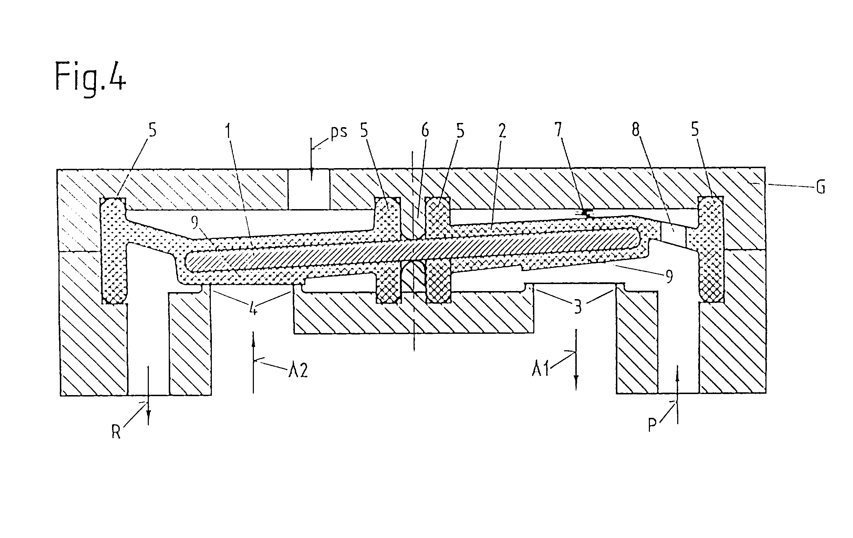

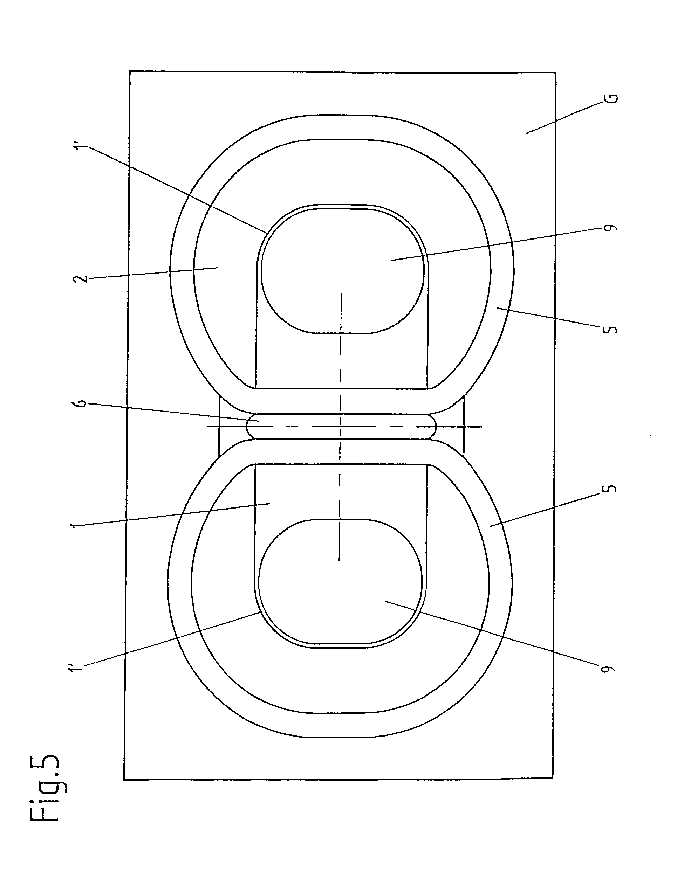

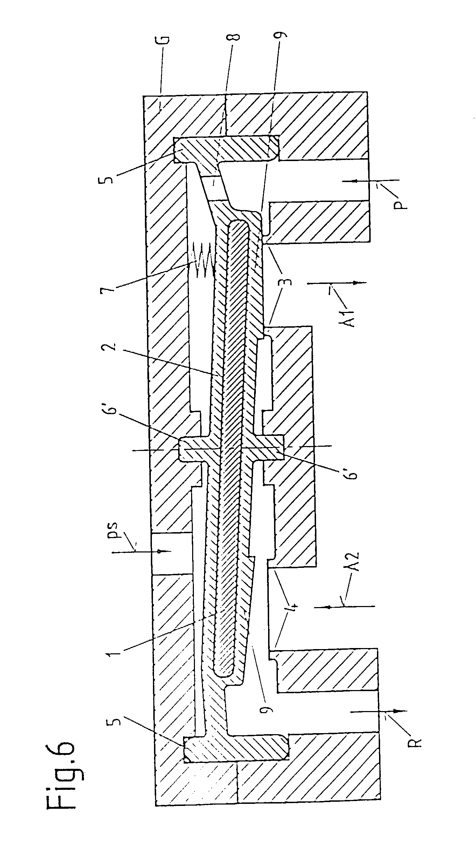

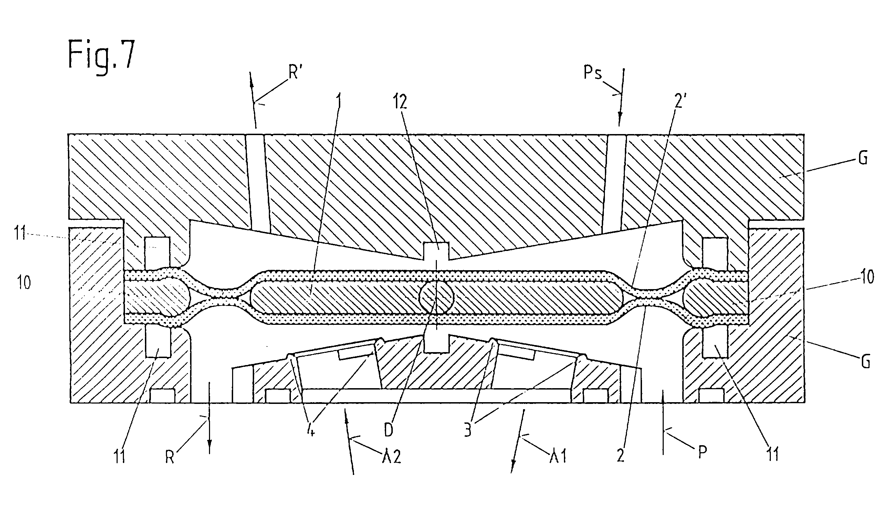

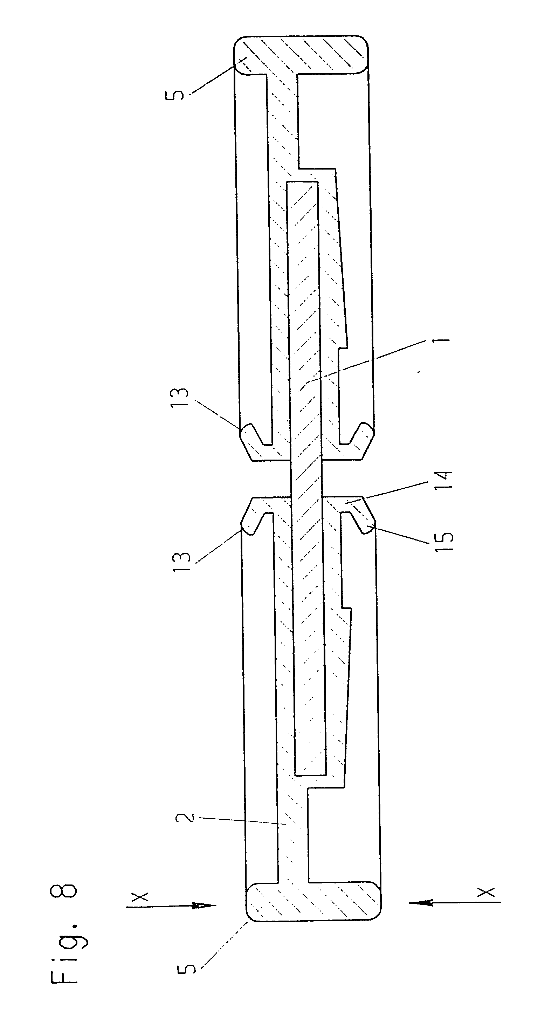

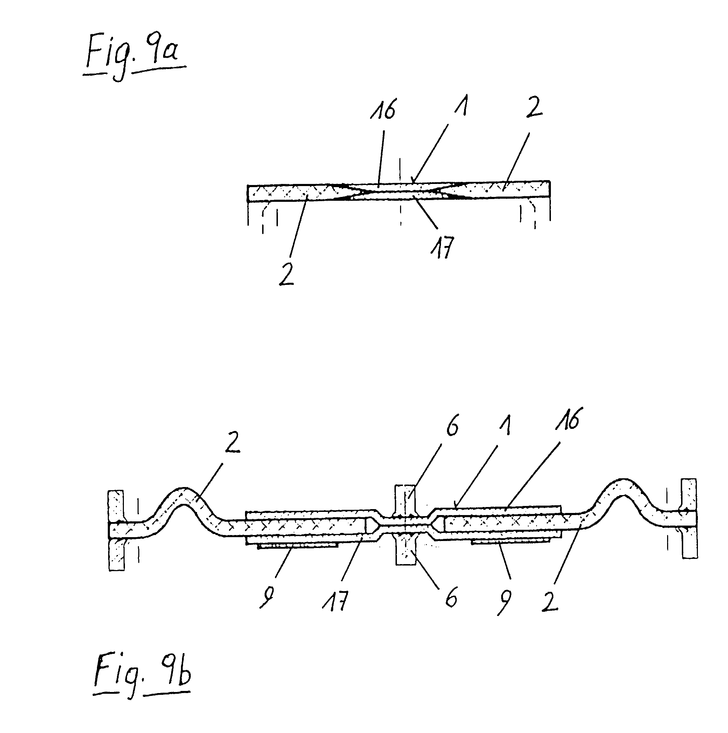

Dabei zeigt die Fig. 1a eine seitliche Schnittansicht einer ersten Ausführungsform des erfindungsgemäßen Wippenventils als 3/2-Wege-Ventil, Fig. 1b ist ein Ventil gleich der Fig. 1a mit geschlossenem Versorgungsdruckanschluß und erstem Arbeitsanschluß und mit versetztem Steuerdruckanschluß als 2/2-Wege-Entlüftungsventil, Fig. 2a ist eine Ansicht gleich Fig. 1 einer anderen Ausführungsform eines erfindungsgemäßen Wippenventils mit Druckausgleich, Fig. 2b ist ein Ventil gleich der Fig. 2a mit nicht belegtem zweiten Arbeitsanschluß und Entlüftungsanschluß als 2/2-Wege-Ventil, Fig. 3 ist eine weitere Ausführungsform eines Ventils mit Druckausgleich in Schließstellung, Fig. 4 ist das Ventil der Fig. 3 in betätigter Stellung, Fig. 5 ist eine Ansicht des Ventils, insbesondere der Wippe und des Dichtelements, der Fig. 3 und 4 von unten und bei geöffnetem Gehäuse, Fig. 6 ist eine Ausführungsform des erfindungsgemäßen Ventils mit anderer Fixierung der Wippe, Fig. 7 ist eine seitliche Schnittansicht einer weiteren Ausführungsform eines erfindungsgemäßen Wippenventils mit zwei separaten Dichtelementen, Fig. 8 ist ein Querschnitt durch ein vorteilhaftes Dichtelement und Fig. 9a und 9b ist ein Quer- bzw. Längsschnitt durch eine alternative Ausführungsform einer erfindungsgemäßen Wippe mit Dichtelement.

Eine um eine Drehachse bewegliche, in wesentlichen starre Wippe 1 aus z.B. Metall ist in einem Ventilgehäuse G gelagert. Die Wippe 1 ist in ein Elastomerdichtelement 2 - für höhere Drücke vorzugsweise gewebeverstärkteingebettet und die Drehachse ist durch zumindest einen Steg 6 im Gehäuse G definiert. Selbstverständlich könnte die Wippe 1 auch einem derartigen Dichtelement 2 auf einer Seite davon aufgelagert und daran befestigt sein, damit die Wippe 1 vom Elastomerdichtelement 2 mitgenommen und eine abhebende Zugwirkung ausüben kann. Auch eine zwischen zwei getrennten Dichtelementen 2 sandwichartig eingeschlossene Wippe 1 oder umgekehrt eine das Dichtelement 2 sandwichartig zwischen zwei Platten haltende Wippe 1 ist möglich (siehe Fig. 7, 9a und 9b).

Das Gehäuse weist mehrere Anschlüsse für das Druckfluid auf, wobei je nach Belegung dieser Anschlüsse oder auch Geschlossenhalten bzw. Nichtbelegung unterschiedliche Ventilfunktionen erhalten werden können, beispielsweise 2/2-Wege-Ventile, 2/2-Wege-Entlüftungsventile, 3/2-Wege-Ventile od. dgl. Schließlich können auch mehrere, zumindest zwei, Wippen parallel zueinander geschaltet in einem Gehäuse vorgesehen sein, wobei derart in an sich bekannter Weise 4/2-Wege-Ventile und 5/2-Wege-Ventile mit sehr flacher Bauweise und schneller und exakter Schaltung realisiert werden können.

In Fig. 1a ist ein 3/2-Wege-Ventil in erfindungsgemäßer Wippenbauweise dargestellt, welches zumindest einen Versorgungsanschluß P für ein Druckfluid aufweist, zwei Arbeitsanschlüsse A1 und A2 und auch einen Entlüftungsanschluß R hat. Ein Arbeitsanschluß A1 ist unmittelbar benachbart dem Versorgungsanschluß P und der zweite Arbeitsanschluß A2 liegt unmittelbar benachbart dem Entlüftungsanschluß R. Beide Arbeitsanschlüsse A1 und A2 führen zum gleichen Arbeitsvolumen und sind im Ventilgehäuse G oder außerhalb davon verbunden, unter allfälliger Zwischenschaltung einer Drossel. Natürlich können auch zwei Druckfluid-Leitungen, jeweils eine von jedem Arbeitsanschluß ausgehend, zum Arbeitsvolumen führen.

Die Anschlüsse P, A und R sind bei einer vorteilhaften Ausführungsform, die sehr flach baut und leicht auf ebene Anschlußplatten aufgesetzt werden kann, alle auf der selben Seite der Wippe 1 bezüglich von deren Ebene angeordnet. Die Mündung des einen Arbeitsanschlusses A1 bildet an der - durch Abheben der Wippe 1 - mit dem Versorgungsanschluß P verbindbaren Position (in den Zeichnungsfiguren durchwegs beispielhaft auf der rechten Seite) einen ersten Ventilsitz 3 und an der mit dem Entlüftungsanschluß R verbindbaren Position (in den Zeichnungsfiguren beispielhaft links) ist an der Mündung des zweiten Arbeitsanschlusses A2 ein zweiter Ventilsitz 4 ausgebildet. In der in Fig. 1 ist ein normalerweise offenes Ventil (NO-Ventil) in seiner offenen Grundstellung dargestellt, welche automatisch durch den am entsprechenden (hier rechten) Schenkel der Wippe 1 und dem zugehörigen Teil des Elastormerdichtelementes 2 angreifenden Versorgungsdruck vom Anschluß P bewirkt wird, solange der Druck am Vorsteueranschluß Ps ausreichend niedrig gehalten wird und somit kein Schließmoment auf die Wippe 1 wirkt. Der zum Schließen des Ventils notwendige Vorsteuerdruck hängt von der Geometrie der Wippe 1 ab und ist bei im wesentlichen symmetrischer Wippe 1 samt Dichtelement 2 durch den auch am Arbeitsanschluß A2 (über das Arbeitsvolumen durchgeschaltet) anliegenden Versorgungsdruck in jedem Fall kleiner als dieser Versorgungsdruck, solange nur die Fläche des Ventilsitzes 4 kleiner ist als die Angriffsfläche für den Versorgungsdruck auf der Seite des Ventilsitzes 3. Allenfalls kann ein Teil der zum Offenhalten des Ventils notwendigen Kraft über ein die Wippe 1 in Offenrichtung beaufschlagendes Federelement erzeugt werden. Damit wird aber auch eine genau definierte Ausgangsstellung vorgegeben, die auch im drucklosen Zustand eingehalten wird. Auch kann dieses Federelement die Bewegung der Wippe unterstützen. Um die Schließbewegung zu erleichtern, kann vorteilhafterweise noch auf der dem Ventilsitz 4 gegenüberliegenden Seite der Wippe 1 eine zusätzliche Entlüftungsmündung R' vorgesehen sein.

Bei der 2/2-Wege-Entlüftungsventil-Variante der Fig. 1b ist der Versorgungsanschluß und der erste Arbeitsanschluß durch einen Stopfen 12 geschlossen oder einfach nicht belegt, der Ventilsitz 3 und die zugehörige Dichtfläche 9 sind daher funktionslos. Wenn man sich die Gegenkraft aufgrund der Komprimierung der Luft im unteren, rechten Raum des Ventils nicht zunutze machen will, ist dieser Raum vorzugsweise zur Atmosphäre entlüftet oder mit dem rechten, oberen Raum verbunden ist, um ein Überschieben der Luft zu gestatten. Dies gilt sinngemäß selbstverständlich für alle entsprechenden Ausführungsformen. Auch der Steuerdruckanschluß wird auf die andere Seite verlegt und wirkt zum Schalten des Ventils mit dem Steuerdruck Ps auf den in der Zeichnung linken Schenkel der Wippe 1. Bei offenem Ventil, d.h. bei vom Ventilsitz 4 abgehobener Dichtfläche wird der zweite Arbeitsanschluß A2 über den Anschluß R entlüftet, bei Beaufschlagung der Wippe 1 mit dem Steuerdruck Ps wird die Dichtfläche 9 auf den Ventilsitz 4 gedrückt und das Ventil geschlossen.

Eine weitere Ausführungsform eines erfindungsgemäßen Wippenventils, nun wieder als 3/2-Wege-Ventil, ist in Fig. 2a dargestellt, wobei es sich nun um ein normalerweise geschlossenes Ventil (NG-Ventil) handelt. Dabei ist in den dem Versorgungsanschluß P und dem zugehörigen Arbeitsanschluß A1 gegenüberliegenden Gehäuseraum des Ventils, d.h. bezüglich der Wippenebene auf der den genannten Anschlüssen gegenüberliegenden Seite der Wippe 1, ein zusätzlicher Anschluß für den Versorgungsdruck vorgesehen, der aber nicht mit einem Arbeitsanschluß in Verbindung gebracht werden kann, sondern nur dazu dient, den entsprechenden Schenkel der Wippe 1 samt Dichtelement 2 auf beiden Seiten mit dem Versorgungsdruck zu beaufschlagen und derart momentenmäßig im wesentlichen auszubalancieren. Gleich wie groß der Versorgungsdruck auch gewählt wird besteht bei dieser Ausführungsform keine Gefahr, daß das Ventil durch einen zu hohen Versorgungsdruck in die offene Stellung gedrückt wird, da dieser immer auf beiden Seiten der Wippe 1 anliegt. Bei geeigneter Geometrie - die meist allein dadurch gegeben ist, daß die Fläche der Mündung des Arbeitsanschlusses A1 auf der Seite der Wippe 1 abgezogen werden muß, auf der das Öffnungsmoment wirkt, kann auch ein Halten des Ventils in der Schließstellung allein durch den Versorgungsdruck gewährleistet werden. Das Ventil arbeitet in vorteilhafter Weise prinzipiell druckunabhängig.

Ein allfälliges Federelement 7 zwischen Wippe 1 und Gehäuse G kann die Wippe 1 in Schließstellung beaufschlagen und derart eine genau definierte Ausgangsstellung gewährleisten und/oder die Schließwirkung unterstützen. Das Öffnen des Ventils wird durch einen über den Vorsteueranschluß Ps angelegten Vorsteuerdruck bewerkstelligt, der auf den dem Versorgungsanschluß P und dem Arbeitsanschluß A1 gegenüberliegenden Schenkel der Wippe 1 einwirkt. In der in Fig. 2a dargestellten geschlossenen Stellung des Ventils ist die Wippe 1 ganz auf den Ventilsitz 3 gedrückt und trennt so den Versorgungsanschluß P vom rechten Arbeitsanschluß A1, während das Arbeitsvolumen über den zweiten Arbeitsanschluß A2 über den Entlüftungsanschluß R entlüftet ist.

Der Vorteil der druckausgeglichenen Bauweise kann selbstverständlich auch bei einer 2/2-Wege-Ventil-Variante, wie beispielsweise in Fig. 2b dargestellt, ausgenutzt werden. Hier sind der in der Zeichnung linke Arbeitsanschluß und der Entlüftungsanschluß nicht belegt oder auch geschlossen, während der Steuerdruckanschluß weiterhin auf der linken Seite der Wippe, d.h. den zu schaltenden Anschlüssen gegenüberliegend, verbleibt. Aufgrund der bereits in Verbindung mit Fig. 2a erläuterten Druck- und Flächenverhältnisse am rechten Schenkel der Wippe 1 bleibt das 2/2-Wege-Ventil der Fig. 2b normalerweise geschlossen und wird erst bei Beaufschlagung des linken Schenkels der Wippe 1 mit dem Steuerdruck Ps geöffnet, was die Verbindung des Versorgungsanschlusses mit dem Arbeitsvolumen herstellt.

Die oben beschriebene Erzielung der Druckunabhängigkeit des Ventils und die Druckunterstützung beim Halten des geschlossenen Zustandes des Ventils kann in einer anderen, in Fig. 3 gezeigten Ausführungsform der Erfindung aber auch dadurch bewirkt werden, daß sich der Versorgungsdruck durch zumindest eine Durchgangsöffnung 8 durch das Elastomerdichtelement 2, allenfalls auch die Wippe 1 selbst, auf die dem Versorgungsanschluß P und dem ersten Ventilsitz 3 des Arbeitsanschlusses A1 gegenüberliegende Seite der Wippe 1 fortpflanzen kann. Dabei darf - wie beim zuvor beschriebenen Beispiel auchüber den Vorsteueranschluß Ps lediglich ein Druck angelegt sein, der auf die linke Seite der Wippe 1 ein Drehmoment bewirkt, das kleiner ist als das durch den Versorgungsdruck auf der rechte Seite der Wippe 1 angreifende Drehmoment. Das besagte Momentenverhältnis ist wieder durch die am Versorgungsanschluß P und Vorsteueranschluß Ps angelegten Drücke und die Geometrie der Wippe 1 einschließlich des Elastomerdichtelements 2 gegeben. Allenfalls kann die Schließwirkung auch hier durch ein auf Druck beanspruchtes Federelement 7 verstärkt werden, das zwischen dem Gehäuse G und der Wippe 1 eingespannt ist. In jedem Fall dient das Federelement 7 auch wieder dazu, eine definierte Grundstellung, im vorliegenden Ausführungsbeispiel die oben beschriebene Schließstellung, des Ventils auch dann zu definieren, wenn kein Druck anliegt bzw. die instabile Mittellage der Wippe 1 so kurz als möglich zu halten.

Wird an Ps ein Vorsteuerdruck von einer Größe angelegt, der auf den linken Teil der Wippe 1 eine Kraft ausübt, die größer ist als die durch den Versorgungsdruck an P auf den rechten Schenkel der Wippe 1 ausgeübte Kraft, wird die Wippe 1 zusammen mit dem Elastomerdichtelement 2 in die in Fig. 4 dargestellte Lage bewegt. In dieser Stellung ist die Wippe 1 vom rechten Ventilsitz 3 abgehoben und somit die Verbindung von Versorgungsdruckanschluß P und dem rechten Arbeitsanschluß A1 hergestellt, sodaß das Arbeitsvolumen mit Druckfluid beaufschlagt wird. Dagegen liegt dann der linke Schenkel der Wippe 1 am Ventilsitz 4 dichtend auf und trennt den linken Arbeitsanschluß A2 vom Entlüftungsanschluß R.

Durch die Ausführung der Membran mit umlaufender Dichtung 5 liegt die Wippe direkt auf den zwei einander gegenüberliegenden Stegen 6 des Gehäuses G auf, die die genau definierte und unverschiebbare Drehachse der Wippe 1 definieren. Dabei muß für bei der Lagerung der Wippe 1 selbstverständlich immer etwas Spiel zwischen der Wippe 1 und den Stegen 6 vorhanden sein, um die ungehinderte Auslenkung der Wippe 1 zu ermöglichen. Dies trägt wesentlich zur Exaktheit und Sicherheit des Schaltens des erfindungsgemäßen Ventils bei, ebenso zur Verlängerung der Wartungsintervalle bzw. der Lebensdauer. Auch die Montage und der Austausch ist durch die umlaufende Dichtung 5 des Elastomerdichtelementes 2 besonders einfach, welche einfach in die entsprechende Ausnehmung des unteren Gehäuseteils eingelegt und beim Aufsetzen des oberen Gehäuseteils festgespannt wird. Zur Erleichterung der Kippbewegung der Wippe 1 sind die mit ihr in Berührung kommenden Grate der Stege 6 abgerundet. Dabei muß aber der umlaufende Dichtrand 5 nicht unbedingt einstückig mit dem Dichtelement 2 ausgeführt sein, sondern kann auch ein separater Bauteil sein, der beim Zusammenbau des Wippenventils an zumindest einer Seite des Dichtelementes 2 zwischen diesem und dem Gehäuse G zwischengelegt wird. Eine derartige Variante ist bei allen Ausführungsformen von Wippe 1 und Dichtelement(en) 2 möglich.

Um eine besonders sichere Abdichtung der beiden Ventilsitze 3, 4 zu gewährleisten, weist die Wippe 1 im Elastomerdichtelement 2 eine derartige Form und Dimension auf, daß die Mündungen des oder jedes Arbeitsanschlusses A von der Wippe 1 selbst abgedeckt ist (siehe dazu auch die Ansicht von unten der Fig. 5). Dabei ist das Elastomerdichtelement 2 vorteilhafterweise mit besonders ausgebildeten Dichtflächen 9 versehen, die beispielsweise durch Verdickungen der Elastomerschicht gegeben sein können und speziell die Ventilsitze 3 bzw. 4 der Arbeitsanschlüsse A überdecken. Die Dichtflächen 9 können auch in unterschiedlicher Entfernung von der Drehachse unterschiedliche Dicke aufweisen, um die Winkeldifferenz zwischen der Wippe 1 in der jeweiligen Endstellung und der Ebene der Ventilsitze auszugleichen. Im Fall, daß die Ventilsitze gegenüber der Mittelebene des Ventils entsprechend der Neigung der Wippe 1 in der jeweiligen Endstellung geneigt sind, wie etwa in Fig. 7 beispielhaft gezeigt, kann das Dichtelement 2 durchgehend die gleiche Dicke aufweisen.

Neben den bereits genannten Vorteilen ist noch hervorzuheben, daß aufgrund der Ausnutzung des Versorgungsdruckes zum Halten des Ventils in der Schließstellung eine Bauweise mit geringer Anzahl von Bauteilen möglich ist und auch kleinste Ventilabmessungen und Schaltwege bei großen Nennweiten erzielbar sind. Auch gestatten die erfindungsgemäßen Merkmale eine Ausführung des Ventils mit kleinsten Schadräumen und daher kurzen Schaltzeiten und exakten Schaltvorgängen.

Eine wieder andere Ausführungsform des erfindungsgemäßen Ventils ist in Fig. 6 dargestellt. Dabei ist die Wippe 1 wieder in dem Dichtelement 2 eingebettet, welches aber nun zwei Stege 6' aufweist, die in entsprechenden nutartigen Ausnehmungen des Gehäuses G gehalten sind. Diese Stege 6' definieren bei dieser Ausführungsform der Fig. 6 die Drehachse der Wippe 1, welche Drehachse hierbei aber nicht derart festgelegt ist wie bei den oben beschriebenen Ausführungsformen. Vielmehr ist ein gewisser Spielraum für seitliche Bewegungen und auch eine Parallelverschiebung der Wippe 1 gegenüber dem Gehäuse G vorhanden. Die Funktionsweise des Ventils ist aber die selbe wie für die Ausführungsform der Fig. 3 und 4.

Die in Fig. 7 dargestellte Ausführungsform zeigt eine sandwichartig zwischen zwei separate Dichtelemente 2, 2' eingelegte Wippe 1, wobei zur Erleichterung der Beweglichkeit die der Wippe 1 zugewandten Seiten der Dichtelemente 2, 2' mit einem Gleitmittel oder einer Gleitbeschichtung versehen sein können. Die Dichtelemente 2, 2' weisen durchgehend gleiche Dicke auf, da die beiden Ventilsitze 3, 4 der Arbeitsanschlüsse A1 und A2 entsprechend der Endstellung der Wippe 1 geneigt sind.

Die gehäusenahen Ränder der Dichtelemente 2, 2' sind durch einen Steg am Gehäuse oder einen separaten Bauteil 10 in einem Abstand zueinander gehalten, der der Dicke der Wippe 1 entspricht, wobei dieser Bauteil 10 vorteilhafterweise als Rahmen ausgeführt ist, der Lager für eine die Wippe 1 durchquerende Drehachse D aufweist. Damit ist in diesem Fall die bestmögliche Festlegung der Drehachse D der Wippe 1 für beste Exaktheit und Sicherheit des Ventils gegeben. Darüberhinaus wird durch den Rahmen 10, der als einstückiger Bauteil mit bereits angebrachter Wippe 1 beim Zusammenbau auf das bereits eingelegte untere Dichtelement 2 aufgelegt werden kann, eine mechanische Überbeanspruchung der Ränder der Dichtelemente 2, 2' vermieden. An den Rändern der Dichtelemente 2, 2' und auch im Bereich der Drehachse D können zur Abgrenzung der Ventilräume Dichtwülste der Dichtelemente 2, 2' in die Nuten 11 und 12 hineinragen oder in diese Nuten 11 und 12 separate Dichtungen eingelegt sein.

Das zwischen dem unteren Dichtelement 2 und dem oberen Dichtelement 2' gelegene Volumen ist vorteilhafterweise über den Rahmen 10 nach außen entlüftet.

Genausogut ist aber auch eine Ausführungsform denkbar, bei der die Wippe 1 zwischen zwei separaten Dichtmembranen 2, 2' aufgenommen ist und diese auch die Wippe 1 halten und fixieren, wobei keine feste Drehachse gegeben ist.

Eine besonders vorteilhafte Ausführungsform eines Dichtelementes 2 mit eingebetteter Wippe 1 ist in Fig. 8 im Längsschnitt dargestellt. Da zur Erzielung einer genügenden Abdichtung die umlaufende Dichtung 5 vorgespannt werden muß, wird dies am zweckmäßigsten durch Ausübung einer Vorspannkraft in Richtung der Pfeile X in Fig. 8 erreicht. Dadurch wird aber im Bereich des Steges 6 eine Kraft auf die Wippe 1 ausgeübt, die deren Bewegung behindern kann. Daher ist vorteilhafterweise die Dichtung 5 zumindest im Bereich des Steges 6 als Lippendichtung mit Dichtlippen 13 ausgeführt, die aus einem im wesentlichen senkrecht auf das Dichtelement 2 verlaufenden Abschnitt 14 und einem vom Steg 6 weggebogenen Abschnitt 15 bestehen. Durch die Vorspannung wird dabei nur die Dichtlippe 13 "verbogen" und es findet keine Stauchung des senkrechten Abschnittes 14 statt. Daher übt die zur Abdichtung nötige Vorspannung auch nur eine minimale Kraft auf die Wippe 1 selbst aus, an der die Kraft- und Drehmomentverhältnisse im wesentlichen nur durch die pneumatischen Gegebenheiten bestimmt und durch die Vorspannung nicht negativ beeinflußt werden.

Schließlich sei noch unter Hinweis auf Fig. 9a und 9b eine weitere Ausführungform für die Wippe 1 und ihre Verbindung mit dem Dichtelement 2 beschrieben. Die Wippe 1 besteht gemäß diesem Beispiel aus zwei Platten 16, 17, welche im zentralen Bereich direkt aneinanderliegen. Außerhalb dieses zentralen Bereiches sind die beiden Platten 16, 17 nach einer Abkantung voneinander beabstandet und zwischen ihnen ist eine Ausnehmung gebildet. In dieser Ausnehmung kommt der dem Gehäuse G abgewandte Rand des oder jedes Dichtelementes 2 zu liegen und wird durch die Platten 16, 17 sandwichartig umfaßt und fixiert. Im Bereich der Ventilsitze kann auf der Außenseite der unteren Platte 17 eine Dichtfläche 9 aufgebracht sein.

In sehr einfacher Weise kann durch Kombination eines normalerweise offenen (Fig. 1) und eines normalerweise geschlossenen (Fig. 2) erfindungsgemäßen Wippenventils, welche selbst jeweils 3/2-Wege-Ventile sind, ein 4/2- oder 5/2-Wege-Ventil erhalten werden, das zwei getrennte Arbeitsvolumina, etwa die beiden Arbeitsräume eines doppelt-wirkenden Pneumatikzylinders, abwechselnd mit dem Versorgungsanschluß verbinden und mit Druckfluid beaufschlagen kann. Dabei bleiben selbstverständlich die oben genannten Vorteile der raschen Schaltzeiten, exakten Schaltvorgänge und Verschleißfestigkeit trotz kleinster Abmessungen und einfacher Ausführung der Ventile voll erhalten. Vorteilhafterweise sind diese beiden kombinierten Ventile in einem gemeinsamen Gehäuse vereint.

Abschließend sei auch noch auf die Möglichkeit der Verwendung der erfindungsgemäßen Ventile als rasch und exakt ansprechende Logikelemente mit konstruktiv einfachem Aufbau hingewiesen. So kann etwa bei einer Ausführungsform nach Fig. 1a und Verwendung ohne Versorgungsdruck ein passives ODER-Element dadurch realisiert werden, daß der Entlüftungsanschluß R' gemeinsam mit dem Versorgungsdruckanschluß P als einer der Eingänge und der Vorsteueranschluß Ps gemeinsam mit dem Entlüftungsanschluß R als zweiter Eingang und der bzw. jeder Arbeitsanschluß A1, A2 als Ausgang geschaltet werden. In diesem Fall wird der Arbeitsanschluß mit Druck beaufschlagt, wenn entweder einer oder beider der Eingänge mit Druck beaufschlagt sind. Andererseits kann durch gemeinsame Schaltung der Entlüftungsanschlüsse R und R' sowie des Vorsteueranschlusses Ps gemeinsam mit dem Versorgungsanschluß P als jeweils ein Eingang und wieder dem oder jeden Arbeitsanschluß A1, A2 als Ausgang ein passives UND-Element realisiert werden.

Ein Element zur Realisierung einer aktiven IMPLIKATION (y=x1 ODER NICHT (x2)) ist unter Verwendung eines Ventilelements mit Versorgungsdruck herstellbar, wenn dessen Vorsteueranschluß Ps und der Entlüftungsanschluß R' die Eingänge des Logikelements und der Arbeitsanschluß A1, A2 dessen Ausgang bilden.

## Patentansprüche

1. Wippenventil mit pneumatischer Vorsteuerung, umfassend ein Gehäuse mit den Druckmittel anschlüssen, in welchem Gehäuse zumindest eine zwischen zwei Endstellungen um eine Achse bewegliche und mit zumindest einer Dichtfläche für zumindest einen Ventilsitz eines Druckmittelanschlusses zusammenwirkenden Wippe eingesetzt ist, wobei ein Schenkel der Wippe über einen Vorsteueranschluß mit Vorsteuerdruck beaufschlagbar ist und die Wippe in einer Endstellung den Ventilsitz dicht abschließt und in der anderen Endstellung mit maximalem Querschnitt öffnet, **dadurch gekennzeichnet**, daß auf zumindest der Seite der Wippe (1) mit einem Arbeitsanschluß (A1; A2) ein Dichtelement (2) zwischen dem Rand der Wippe (1) und der Innenwand des Gehäuses (G) vorgesehen ist, durch welches auf einer Seite der Wippe (1) bezüglich der Achse als auch der Ebene der Wippe eine Kammer mit zumindest zwei Anschlüssen gebildet ist, die vorzugsweise von zumindest einem weiteren Anschluß auf der bezüglich der Wippenebene gegenüberliegenden Seite abgetrennt ist.

2. Wippenventil nach Anspruch 1, dadurch gekennzeichnet, daß auf beiden Seiten der Wippe (1) ein Dichtelement (2) zwischen dem Rand der Wippe (1) und der Innenwand des Gehäuses (G) vorgesehen ist und dadurch auf jeder Seite der Wippe je eine Kammer mit zumindest zwei Anschlüssen gebildet ist, die vorzugsweise von zumindest einem weiteren Anschluß auf der bezüglich der Wippenebene gegenüberliegenden Seite abgetrennt ist.

3. Wippenventil nach Anspruch 1 oder 2, dadurch gekennzeichnet, daß je ein Arbeitsanschluß (A1, A2) auf jeder Seite der Wippe (1) vorhanden ist, wobei in jeder der beiden Endstellungen der Wippe (1) jeweils ein Arbeitsanschluß durch die Wippe (1) und die Dichtfläche (9) abgedeckt ist, wobei ein Arbeitsanschluß (A1) durch die Wippe (1) von einem Versorgungsanschluß (P) und der zweite Arbeitsanschluß (A2) durch die Wippe (1) von einem Entlüftungsanschluß (R) trennbar ist.

4. Wippenventil nach Anspruch 3, dadurch gekennzeichnet, daß die wirksame Angriffsfläche für den Versorgungsdruck an den beweglichen Teilen des Ventils größer ist als die Fläche der Mündung (4) des zweiten, mit dem Entlüftungsanschluß (R) verbindbaren Arbeitsanschlusses (A2) (Fig.1).

5. Wippenventil nach Anspruch 1 oder 2, dadurch gekennzeichnet, daß auf lediglich einer Seite der Wippe (1) zwei Anschlüsse in eine Kammer vorgesehen sind, welche Kammer durch das sich vom Rand der Wippe (1) zur Innenwand des Gehäuses (G) erstreckende elastische Dichtelement (2) begrenzt ist.

6. Wippenventil dadurch gekennzeichnet, daß zumindest zwei Wippen (1) in einem Gehäuse (G) parallel zueinander geschaltet vorgesehen sind.

7. Wippenventil nach zumindest einem der vorhergehenden Ansprüche, dadurch gekennzeichnet, daß die Wippe (1) im wesentlichen symmetrisch um ihre Drehachse ist.

8. Wippenventil nach zumindest einem der vorhergehenden Ansprüche, dadurch gekennzeichnet, daß der äußere Rand (1') der Wippe (1) zumindest über einen Teil seiner Länge von der Gehäuseinnenwandung beabstandet ist und zumindest jeweils ein sich zwischen dem Rand (1') der Wippe (1) und der Gehäuseinnenwandung erstreckendes Dichtelement (2), vorzugsweise ein Elastomerdichtelement, vorgesehen ist.

9. Wippenventil nach Anspruch 8, dadurch gekennzeichnet, daß das Dichtelement (2) einstückig mit zumindest einer Dichtfläche (9) für einen Arbeitsanschluß (A) ausgeführt ist, vorzugsweise einstückig mit beiden Dichtflächeen (9) ist, und sich auf beide Seiten der Wippe (1) erstreckt.

10. Wippenventil nach einem der vorhergehenden Ansprüche, dadurch gekennzeichnet, daß der Versorgungsanschluß (P), die Arbeitsanschlüsse (A) und der Entlüftungsanschluß (R) im selben Halbraum bezüglich der Ebene der Wippe (1) angeordnet sind, wobei der Versorgungsanschluß (P) und der Entlüftungsanschluß (R) einander bezüglich der Drehachse der Wippe (1) gegenüberliegen, und daß der Vorsteueranschluß (Ps) in dem den übrigen Anschlüssen (P, A, R) gegenüberliegenden Halbraum bezüglich der Ebene der Wippe (1) liegt.

11. Wippenventil nach einem der vorhergehenden Ansprüche, dadurch gekennzeichnet, daß zwischen einem Schenkel der Wippe (1) und dem Gehäuse (G) ein Federelement (7) eingespannt ist und diesen Schenkel der Wippe (1) mit einer Kraft beaufschlagt, wodurch die Wippe (1) im drucklosen Zustand des Wippenventils in einer definierten Endstellung gehalten ist und auch die Bewegung der Wippe (1) unterstützt wird.

12. Wippenventil nach einem der Ansprüche 1 bis 10, dadurch gekennzeichnet, daß das Dichtelement (2) eine Endlage bevorzugt und die Wippe (1) in diese Endlage vorspannt, wobei das Dichtelement (2) vorzugsweise in Form einer gesickten Elastomermembran ausgebildet ist.

13. Wippenventil nach einem der vorhergehenden Ansprüche, dadurch gekennzeichnet, daß der Vorsteueranschluß (Ps) auf der Seite des Schenkels der Wippe (1) mündet, der den einen Arbeitsanschluß (A) und den Entlüftungsanschluß (R) voneinander trennt (Fig. 2a, 2b).

14. Wippenventil nach Anspruch 13, dadurch gekennzeichnet, daß eine Zuleitung (P') für den Versorgungsdruck in den Gehäuseraum vorgesehen ist, der dem Gehäuseraum gegenüberliegt, in den der Versorgungsdruckanschluß (P) und einer der Arbeitsanschlüsse (A) münden (Fig.2).

15. Wippenventil nach Anspruch 13, dadurch gekennzeichnet, daß in dem Schenkel der Wippe (1), der den Versorgungsanschluß (P) und den Arbeitsanschluß (A) trennt und/oder dem zugehörigen Abschnitt des Dichtelementes (2), zumindest eine Durchgangsöffnung (8) in den dem Versorgungsanschluß (P) gegenüberliegenden Gehäuseraum vorgesehen ist (Fig.3, Fig.4).

16. Wippenventil nach einem der vorhergehenden Ansprüche, dadurch gekennzeichnet, daß die Drehachse der Wippe (1) durch zumindest einen Steg (6) des Gehäuses (G) definiert ist, auf welchem die Wippe (1) direkt aufliegt, vorzugsweise durch zwei einander gegenüberliegende Stege (6), zwischen denen die Wippe (1) eingespannt ist.

17. Wippenventil nach Anspruch 16, dadurch gekennzeichnet, daß der oder jeder Steg (6) durch einen Abschnitt einer umlaufenden Dichtung (5) des Dichtelementes (2) abgedichtet ist.

18. Wippenventil nach Anspruch 17, dadurch gekennzeichnet, daß die Dichtung (5) im Bereich des Steges (6) als Lippendichtung mit vom Steg (6) weggebogenen Dichtlippen ausgeführt ist.

19. Wippenventil nach einem der Ansprüche 1 bis 15, dadurch gekennzeichnet, daß die Drehachse der Wippe (1) durch zumindest einen Steg (6') zumindest eines der Dichtelemente (2) definiert ist, welcher Steg (6') in entsprechenden Ausnehmungen des Gehäuses (G) aufgenommen ist, vorzugsweise durch zwei Stege (6') auf einander gegenüberliegenden Seiten der Dichtelemente (2).

20. Wippenventil nach einem der vorhergehenden Ansprüche, dadurch gekennzeichnet, daß die Wippe (1) in ein einstückiges Dichtelement (2) eingebettet ist.

21. Wippenventil nach einem der Ansprüche 1 bis 19, dadurch gekennzeichnet, daß die Wippe (1) einem einstückigen Dichtelement auf dessen Oberfläche, vorzugsweise auf der den abzudichtenden Ventilsitzen (3, 4) gegenüberliegenden Seite, aufgelagert und daran befestigt ist.

22. Wippenventil nach einem der Ansprüche 1 bis 19, dadurch gekennzeichnet, daß die Wippe (1) zwischen zwei separaten Dichtelementen (2, 2') eingebettet ist, wobei die Dichtelemente (2, 2') vorzugsweise im Einspannbereich von einem Gehäusesteg oder einem zusätzlichen Bauteil (10) mit vorzugsweise der gleichen Dicke wie die Wippe (1) voneinander im Abstand gehalten werden (Fig.7).

23. Wippenventil nach Anspruch 22, dadurch gekennzeichnet, daß der Raum zwischen den beiden Dichtelementen (2, 2') entlüftet ist.

24. Wippenventil nach einem der Ansprüche 1 bis 19, dadurch gekennzeichnet, daß die Wippe (1) zumindest im Randbereich eine Ausnehmung aufweist, in welche der dem Gehäuse (G) abgewandte Rand des Dichtelementes (2) eingespannt und abgedichtet gehalten ist.

25. Wippenventil nach Anspruch 24, dadurch gekennzeichnet, daß die Wippe (1) aus zwei übereinanderliegenden und vorzugsweise im Bereich des Steges (6) direkt aneinanderliegenden Platten besteht, wobei die äußeren Ränder der Platten voneinander beabstandet sind und der innere Rand des Dichtelementes (2) sandwichartig dazwischen eingespannt ist (Fig. 9a, 9b).

26. Wippenventil nach Anspruch 22, dadurch gekennzeichnet, daß der zusätzliche Bauteil (10) ein Rahmen ist, der auch Lager für eine Drehachse (D) der Wippe (1) aufweist.

27. Wippenventil nach einem der vorhergehenden Ansprüche, dadurch gekennzeichnet, daß die Wippe (1) selbst eine derartige Ausdehnung aufweist, daß jede Öffnung (3, 4) jedes Arbeitsanschlusses (A) abgedeckt ist.

28. Wippenventil nach einem der vorhergehenden Ansprüche als Logikelement.
